# EUROPÄISCHE PATENTANMELDUNG

(11) **EP 1 977 893 A2**
(43) Veröffentlichungstag der Anmeldung: **08.10.2008**
(21) Anmeldenummer: 08004646.9
(22) Anmeldetag: 13.03.2008
(51) Int. Cl.: B41F 13/00

(54) **Transportsystem**

(30) Priorität: 26.03.2007 DE 102007014876
(71) Anmelder: KBA-METRONIC AG, 97209 Veitshöchheim (DE)
(72) Erfinder: Bausenwein, Alfred, 97291 Thüngersheim (DE); Schmitt, Peter, 97074 Würzburg (DE)
(74) Vertreter: Borkowski, Jens

(57) **Zusammenfassung**

Die Erfindung betrifft ein Transportsystem umfassend mehrere Transportträger (3) die mittels einer Führungseinrichtung (20, 21, 22) entlang eines Transportweges (1) transportierbar sind, insbesondere um zu bedruckende Werkstücke durch Behandlungsstationen (10a, 10b, 10c) einer Druckmaschine zu transportieren. Die Erfindung betrifft weiterhin ein Verfahren zum Transport von Transportträgern (3) mittels einer Führungseinrichtung (20, 21, 22) entlang eines Transportweges (1), insbesondere um zu bedruckende Werkstücke durch Behandlungsstationen (10a, 10b, 10c) einer Druckmaschine zu transportieren.

## Beschreibung

Die Erfindung betrifft ein Transportsystem umfassend mehrere Transportträger die mittels einer Führungseinrichtung entlang eines Transportweges transportierbar sind, insbesondere um zu bedruckende Werkstücke durch Behandlungsstationen einer Druckmaschine zu transportieren. Die Erfindung betrifft weiterhin ein Verfahren zum Transport von Transportträgern mittels einer Führungseinrichtung entlang eines Transportweges, insbesondere um zu bedruckende Werkstücke durch Behandlungsstationen einer Druckmaschine zu transportieren.

Transportsysteme zum Transport von Werkstücken mittels Transportträgern entlang eines Transportweges sind bekannt. Die Transportträger sind dabei beispielsweise als Schlitten zur Aufnahme von Werkstücken ausgeführt, die in Führungseinrichtungen entlang eines Transportweges bewegt werden und die während des Transportes entlang des Weges beispielsweise durch mehrere entlang des Transportwegs angeordnete Behandlungsstationen geführt werden.

Hierbei kann es sich z.B. um Behandlungsstationen einer Druckmaschine handeln, wie z.B. Auflege- und Entnahmestationen, Druckwerke, Lackierwerke, Trocknungseinheiten, Identifikationseinheiten etc. Bei den Werkstücken kann es sich z.B. um jegliche Art von Objekten handeln, die Bedruckt werden sollen, z.B. Karten, Datenträger (CD, DVD etc) oder ähnliche. Somit kann ein Transportsystem einen Teil einer Druckmaschine bilden, aber auch für jegliche andere Anwendung eingesetzt werden, in welcher Werkstücke transportiert werden sollen.

Der Transport der Transportträger erfolgt bei den bekannten Transportsystemen beispielsweise dadurch, dass die Transportträger an umlaufenden Ketten oder Transportbändern befestigt sind oder zumindest streckenweise von diesen über entsprechende Eingriffe und / oder Mitnehmer in den Transportträgern mitbewegt werden, wobei die Transportketten oder die Transportbänder zumindest abschnittsweise von einem gemeinsamen Antrieb angetrieben werden.

Nachteilig hierbei ist, dass alle Träger zumindest streckenweise stets die gleiche Bewegungsart, wie beispielsweise eine kontinuierliche oder eine getaktete Bewegung ausführen und somit Bearbeitungsstationen, welche unterschiedliche Bewegungsabläufe der Transportträger erfordern, entlang dieser Wegstrecke nicht angeordnet werden können. Ist dies für einen Produktionsablauf allerdings erforderlich, so ist es nötig, entsprechend mehrere mit unterschiedlichen Bewegungsabläufen arbeitende Transporteinheiten zu einem gemeinsamen Transportsystem zu kombinieren.

Das bedeutet, dass zwischen Transportabschnitten des Transportweges, welche mit unterschiedlicher Transportart arbeiten, die Transportträger nahtlos übergeben werden müssen. Diese Übergabe ist allerdings in der Regel mit einer Reihe von Problemen verbunden, da die jeweiligen benachbarten Transporteinheiten während der Übergabe eines Transportträgers von einer vorausgehenden Transporteinheit auf eine nachfolgende Transporteinheit exakt zueinander synchron arbeiten müssen, um so Vibrationen, Stöße etc. auf die Transportträger und damit auf die Werkstücke zu vermeiden, wodurch ein Produktionsprozess empfindlich gestört werden kann.

Darüber hinaus ist es insbesondere bei einer mechanischen Übergabe der Transportträger zwischen nachfolgenden unterschiedlich arbeitenden Transporteinheiten nur schwer möglich, nachträgliche Anpassungen oder prozesstechnische Veränderungen im Bewegungsablauf zu realisieren, so dass eine solche Ausführung eines Transportsystems nur eine geringe Flexibilität aufweist.

Nachteilig ist weiterhin, dass eine erforderliche Positionsgenauigkeit eines Transportträgers innerhalb einer Behandlungsstation ausschließlich durch das Transportsystem nur bedingt gewährleistet ist, da sich aufgrund von Werkstücktoleranzen, Transporttoleranzen und Verschleißerscheinungen nur eine mittlere Genauigkeit erreichen lässt und sich diese im Laufe der Betriebsdauer verschlechtert.

Um innerhalb einer Behandlungsstation eine erforderliche Genauigkeit zu erzielen, ist es daher in der Regel erforderlich, den Transportträger mit dem darauf befestigten Werkstück zumindest kurzzeitig während der Behandlung von der Transporteinrichtung abzukoppeln und mit externen Einrichtungen entsprechend auszurichten. Nach einer erfolgten Behandlung muss dann der Transportträger wieder an die Transporteinrichtung angekoppelt werden. Es ist leicht einzusehen, dass ein solcher Vorgang nur innerhalb eines im Wesentlichen unflexiblen Funktionsablaufes funktionieren kann, um die genannten Störeinflüsse zu unterdrücken.

Eine flexible Veränderung des Funktionsablaufes zu dessen Optimierung oder zur Implementierung anderer oder neuer Behandlungsarten in einen bestehenden Funktionsablauf und damit in ein bestehendes Transportsystem ist damit so gut wie unmöglich.

In einer anderen Ausführung bekannter Transportsysteme werden die Transportträger beispielsweise mittels einer Transportschnecke zumindest in Teilbereichen des Transportweges bewegt, indem ein oder mehrere an den Transportträgern befestigte Mitnehmer in einen oder mehrere Gänge der Transportschnecke eingreifen und beim Drehen der Transportschnecke über die Steigung der Schneckengänge mitbewegt werden. Je nach Ausführung der Steigungsprofile entlang der Transportschnecke lassen sich so unterschiedliche Transportgeschwindigkeiten der Transportträger realisieren.

Nachteilig an dieser Art des Transportes ist es, dass diese Art der Bewegung stets nur ein unveränderliches Geschwindigkeitsprofil ermöglicht, welches im Wesentlichen von der Ausgestaltung der Schneckengänge abhängt. Nachteilig ist weiterhin, dass diese Art des Transports lediglich innerhalb eines linearen Abschnittes des gesamten Transportweges möglich ist, so dass an jeder Grenze eines Schneckenantriebes eine Übergabe an ein anders arbeitendes Transportsystem erfolgen muss, was in der Regel, wie bereits ausgeführt, aufwändig und problematisch ist.

Aufgabe der Erfindung ist es daher, die oben genannten Nachteile zu beheben und ein Verfahren und eine Vorrichtung zu schaffen mit welchen es möglich ist, mehrere, insbesondere eine vorgegebene Anzahl von Transportträgern entlang eines insbesondere geschlossenen Transportweges zu jedem Zeitpunkt so zu steuern, dass jeder Transportträger zumindest innerhalb definierter Grenzen individuell in seiner Bewegung gesteuert werden kann, insbesondere wobei keine Übergabe zwischen unterschiedlich arbeitenden Transportarten stattfindet.

Aufgabe der Erfindung ist es weiterhin, entlang des Transportweges keine in ihrer Bewegungsart bevorzugten Bereiche zu schaffen, sondern dafür zu sorgen, dass die Transportträger mittels einer individuellen Steuerung die erforderlichen unterschiedlichen Bewegungsarten und/oder Bewegungsmuster jeweils selbst ausführen.

Aufgabe der Erfindung ist es weiterhin, eine mechanische Kopplung zwischen den Transportträgern zu vermeiden, so dass keine gegenseitige mechanische Beeinflussung der Transportträger untereinander stattfinden kann.

Aufgabe der Erfindung ist es weiterhin, ein Transportsystem für die Bewegung von Transportträgern entlang eines Transportweges zu schaffen, mit dem es möglich ist, in einfacher Weise eine Änderung der Transporteigenschaften des Transportsystems herbeizuführen.

Gelöst wird die Aufgabe gemäß einem Aspekt der Erfindung durch ein Transportverfahren, bei dem jeder Transportträger entlang eines geschlossenen Transportwegs mittels eines für jeden Transportträger individuell erzeugten wandernden Magnetfeldes zumindest abschnittsweise und/oder zeitweise in seiner Bewegung/Bewegungsart individuell gesteuert wird.

Um dies konstruktiv umzusetzen ist es gemäß einem weiteren Aspekt der Erfindung vorgesehen, dass entlang eines geschlossenen Transportwegs individuell ansteuerbare Elektromagnete angeordnet sind und jeder Transportträger wenigstens einen Magneten aufweist, wobei jeder Transportträger durch eine elektromagnetische Wechselwirkung in Richtung des Transportwegs transportierbar ist und zumindest abschnittsweise und/oder zeitweise in seiner Bewegung/Bewegungsart individuell steuerbar ist.

So zeichnet sich ein solches System und Verfahren gegenüber den Stand der Technik dadurch aus, dass keinerlei mechanische Kopplung zwischen den Transportträgern existiert und somit jeder Transportträger individuell bewegt werden kann. Um die Bewegung zu erzeugen, wird, insbesondere für jeden Transportträger individuell ein Magnetfeld entlang des Transportweges von Elektromagnet zu Elektromagnet weitergeschaltet, so dass dieses Feld entlang des Transportweges wandert. Hierbei kann dieses wandernde Magnetfeld durch die Ansteuerung einzelner oder mehrerer, z.B. Gruppen von Elektromagneten erzeugt werden, die entlang des Transportweges angeordnet sind.

Diesem wandernden Magnetfeld, welches für jeden Transportträger individuell durch eine übergeordnete Steuerung geschaltet werden kann, folgt ein Transportträger aufgrund einer anziehenden oder abstoßenden Wechselwirkung zwischen dem wandernden Feld und einem bzgl. des Transportträgers lokalen Magnetfeld, das durch wenigstens einen, bevorzugt mehrere am Transportträger angeordnete Magneten erzeugt wird. Hierbei kann es sich bevorzugt um Permanentmagnete handeln, die ein statisches nicht veränderliches Magnetfeld erzeugen. Ebenso kann es sich beispielsweise um Kurzschlussläufer handeln, in die durch das Magnetfeld der Elektromagnete Ströme induziert werden, die ihrerseits ein Magnetfeld erzeugen. Es ist auch möglich, dieses Magnetfeld der Transportträger durch Elektromagnete auszubilden, z.B. wenn ein Transportträger eine eigene Stromversorgung hat.

Das Transportsystem kann in einer Ausführung derart ausgebildet sein, dass jeder Transportträger mit seinem wenigstens einen Magneten und mit den Elektromagneten entlang des Transportwegs im Wesentlichen jeweils einen Antrieb, insbesondere einen Linearantrieb bildet. Hierbei können die Elektromagnete entlang/an einer Führungseinrichtung angeordnet sein, die z.B. eine Führungsschiene umfassen kann, auf, an oder in der die Transportträger laufen, z.B. mittels Rollen, die an den Transportträgern angeordnet sind.

Da jeder Transportträger somit physikalisch Teil seines eigenen Antriebs ist, dessen Rest durch die wechselwirkenden Elektromagneten entlang des Transportwegs gegeben sind, ist eine individuelle Steuerung jedes einzelnen Transportträgers möglich, wofür z.B. die eingangs genannte übergeordnete Steuerung eingesetzt werden kann. Das Transportssystem kann somit auch so verstanden werden, dass der Transportweg und die Führungseinrichtungen bzw. deren Elektromagnete für die Transportträger so ausgebildet sind, dass sie jeweils einen Teil eines Antriebs, insbesondere Linearantriebes darstellen, bevorzugt einen elektrisch ansteuerbaren Teil eines Linearantriebes.

Gemäß einem Aspekt der Erfindung kann es zur logischen Organisation eines Transportverfahrens dabei auch vorgesehen sein, dass der elektromagnetische Antrieb zur Bewegung der Transportträger logisch in einen ersten und einen zweiten Antrieb, insbesondere Linearantrieb unterteilt ist. Beispielsweise kann der logische erste Antrieb auf alle Transportträger gemeinsam und gleichartig wirken. Weiterhin kann der logische zweite Antrieb auf jeden Transportträger individuell wirken. So kann erreicht werden, dass die Bewegung jedes Transportträgers entlang des Transportwegs durch eine Überlagerung der Bewegungen des gemeinsamen logischen ersten Antriebs und des logischen zweiten, insbesondere lokal nur bei einem betreffenden Transportträger wirkenden Antriebs erzeugt wird. Ebenso kann es vorgesehen sein, die Bewegung durch eine übergeordnete Steuerung durch jegliches andere Steuerungskonzept zu gewährleisten.

Bei einer Ausführung der oben genannten Magnete des Transportträgers als Permanentmagnete kann jeder Transportträger als passives Element des

Antriebes verstanden werden, welches mit entlang des Transportwegs stationär angeordneten Elektromagneten in Wechselwirkung tritt. Durch die Ausführung der Transportträger als passive, bewegliche Elemente eines Antriebs, insbesondere Linearantriebes innerhalb eines insbesondere geschlossenen Transportweges und der damit verbundene Wegfall von elektrischen Verbindungen zu den Transportträgern ist es bevorzugt möglich die Transportträger für eine beliebige Dauer beispielsweise in einer Richtung entlang des insbesondere geschlossenen Transportweges zu bewegen.

Die Bewegung der Transportträger kann hierbei entsprechend einer individuellen elektrischen Ansteuerung der stationär angeordneten Elektromagnete erfolgen, wodurch eine Kraftwirkung auf den Transportträger erzeugt werden kann, wodurch dieser entlang des Transportwegs bewegt werden kann. Da auf jeden Transportträger stets nur eine bestimmte Anzahl der entlang des gesamten Transportweges angeordneten Elektromagnete wirkt, ist es möglich, je nach Ansteuerung der auf die Magnete eines bestimmten Transportträgers wirkenden Elektromagnete, den Transportträger beispielsweise zu beschleunigen, abzubremsen oder mit einer konstanten Geschwindigkeit entlang des Transportweges zu bewegen oder an einer gewünschten Position mit hoher Genauigkeit zu positionieren.

Es kann dabei erfindungsgemäß vorgesehen sein, dass hierdurch jeder sich entlang des Transportweges befindliche Transportträger eine durch eine übergeordnete Steuerung vorgebbare individuelle Bewegungsart ausführen kann, so dass er streckenweise beispielsweise mit einer konstanten Geschwindigkeit, einer beschleunigten Geschwindigkeit oder auch eine getaktete Bewegung ausführen kann, indem die zu der jeweiligen Position und zu dem jeweiligen Zeitpunkt erforderlichen Elektromagnete entlang des Transportwegs entsprechend angesteuert werden.

Zur Vermeidung von Kollisionen benachbarter Transportträger miteinander kann es weiterhin erfindungsgemäß vorgesehen sein, dass für jeden Transportträger eine bestimmte Länge des gesamten Transportweges, im Folgenden Streckenfenster genannt, definiert ist, in welchem er individuelle Bewegungen ausführen kann. Die Summe der Längen aller Streckenfenster kann dabei der gesamten Weglänge des Transportweges entsprechen, wobei die Anzahl der Streckenfenster zweckmäßigerweise der Anzahl der sich entlang des Transportwegs befindlichen Transportträger entspricht.

Es kann erfindungsgemäß allerdings auch möglich sein, eine sich von der Anzahl der Transportträger unterschiedliche Anzahl von Streckenfenstern zu wählen, um beispielsweise mehrere Transportträger innerhalb eines Streckenfensters gleichartig und gleichzeitig zu bewegen, oder um beispielsweise Streckenfenster zu definieren, in denen sich kein Transportträger befindet. Die Streckenfenster stellen dabei Bereiche dar, durch die die individuellen Bewegungen der jeweiligen Transportträger begrenzt werden. Gleichzeitig können die Streckenfenster als Transportcontainer für den Transportträger betrachtet werden, welche ihrerseits bei einer beispielhaften logischen Unterteilung des Antriebs mit einer vorgegebenen Geschwindigkeit des logischen ersten Linearantriebes gleichartig entlang des Transportweges transportiert werden.

Es kann in einer Ausführung erfindungsgemäß vorgesehen sein, dass die Streckenfenster jeweils die gleiche Größe besitzen und insbesondere jeweils den gleichen Abstand zueinander aufweisen. Ein von einer übergeordneten Steuerung dem ersten logischen Linearantrieb vorgegebenes Bewegungsprofil überträgt sich damit gleichartig auf alle Streckenfenster, ohne deren jeweilige relative Positionen zueinander entlang des Transportweges zu verändern.

Es kann in einer zweiten Ausführung erfindungsgemäß vorgesehen sein, dass die Streckenfenster jeweils eine unterschiedliche Größe besitzen und jeweils einen konstanten Abstand zu benachbarten Streckenfenstern aufweisen. Ein von einer übergeordneten Steuerung dem ersten Linearantrieb vorgegebenes Bewegungsprofil überträgt sich damit gleichartig auf alle Streckenfenster, ohne deren jeweilige relativen Positionen zueinander entlang des Transportweges zu verändern.

Es kann in einer dritten Ausführung erfindungsgemäß vorgesehen sein, dass die Streckenfenster jeweils eine unterschiedliche Größe besitzen und deren jeweilige Größe mittels einer übergeordneten Steuerung veränderbar ist, und damit die Abstände benachbarter Streckenfenster veränderbar sind. Ein von einer übergeordneten Steuerung dem ersten Linearantrieb vorgegebenes Bewegungsprofil überträgt sich damit auf alle Streckenfenster, wobei deren jeweiliges Bewegungsprofil zusätzlich von der jeweiligen Größe des Streckenfensters abhängig ist.

Es kann weiterhin erfindungsgemäß vorgesehen sein, dass jeder Transportträger und/oder der Transportweg bzw. die Führungseinrichtung über Sensoreinrichtungen verfügt, wodurch es möglich ist, die Position und die jeweiligen Bewegungsparameter jedes Transportträgers zu bestimmen und aus diesen Informationen gegebenenfalls zusätzliche und individuelle Signale zu generieren, welche beispielsweise in einem bestimmten Bereich des Transportweges oder innerhalb einer bestimmten Behandlungsstation entlang des Transportweges erforderlich sind. Eine Sensoreinrichtung, die seitens des Transportwegs vorgesehen ist, kann dabei auch durch die Spulen der Elektromagnete gebildet werden, die entlang des Transportweges angeordnet sind, da diese eine Induktionsspannung erzeugen, sofern sich in der Umgebung ein Transportträger mit den an ihm befestigten Magneten bewegt.

Gelangt beispielsweise ein Transportträger mit den auf ihm befindlichen zu bedruckenden Objekten in eine entlang des Transportweges angeordnete Druckstation, so ist beispielsweise ein Drucktaktsignal erforderlich, welches individuell auf die Position und die Bewegung dieses Transportträgers abgestimmt ist, um ein optimales Druckergebnis zu erreichen.

Dadurch, dass mittels der Sensoreinrichtung(en) die Position und die Bewegungsparameter des Transportträgers erfasst werden, kann ein Drucktaktsignal mittels einer übergeordneten Steuerung erzeugt werden.

Allgemein gilt, dass darüber hinaus weitere individuelle Signale erzeugt werden können, welche für die individuelle Bewegungssteuerung der jeweiligen Transportträger an ihrer jeweiligen Position benötigt werden, beispielsweise für eine Druckauslösung, eine Positionsnachregelung, eine Handlingsteuerung oder ähnliches. So können z.B. die Steuerungssignale der übergeordneten Steuerung für die Bestromung der Elektromagneten durch Rückkopplung der Signale oder Daten der Sensoreinrichtung für jeden Transportträger individuell erzeugt werden.

Zur Steuerung der jeweiligen Transportträger und zur Vermeidung von Kollisionen der sich entlang des Transportwegs befindlichen Transportträger kann es wie bereits geschildert erfindungsgemäß vorgesehen sein, die Länge des Transportwegs innerhalb der Ablaufsteuerung softwaremäßig in eine Anzahl Abschnitte, den Streckenfenstern, zu unterteilen, wobei die Anzahl der Abschnitte bevorzugt der Anzahl der sich im Transportsystem befindlichen Transportträgern entsprechen kann. In einer ersten erfindungsgemäßen Ausführung können die Streckenfenster dabei gleich lang und gleichzeitig länger als die maximale Länge eines mit einem Werkstück versehenen Transportträgers sein.

Es kann, wie eingangs erwähnt, weiterhin vorgesehen sein, dass jeder Transportträger innerhalb des ihm zugewiesenen Streckenfensters unabhängig bewegt werden kann, z.B. mittels des logischen zweiten Antriebs, insbesondere der jedem Transportträger zugeordnet ist.

Es kann weiterhin erfindungsgemäß vorgesehen sein, dass alle Streckenfenster und damit Transportträger mit einer Bewegungskomponente mit einer gemeinsamen Geschwindigkeit und Bewegungsart entlang des Transportweges bewegt werden und diese Bewegung (erste Bewegungskomponente) die jeweiligen individuellen Bewegungen der Transportträger innerhalb ihres Abschnittes (zweite Bewegungskomponente) überlagert. Die gemeinsame Bewegungsart kann dabei zumindest zeitweise beschleunigt, kontinuierlich oder getaktet verlaufen.

Es kann zweckmäßig sein, wie in den bereits geschilderten weiteren erfindungsgemäßen Ausführungen die Anzahl der Streckenfenster unterschiedlich zur Anzahl der Transportträger auszuführen, wenn es für einen bestimmten Produktionsablauf erforderlich ist.

Es kann weiterhin zweckmäßig sein, die Größe der jeweiligen Streckenfenster in Abhängigkeit von ihrer absoluten Position entlang des Transportweges zu verändern, wenn es für einen bestimmten Produktionsablauf erforderlich ist.

Dies kann beispielsweise dadurch geschehen, dass mittels einer übergeordneten Steuerung in bestimmten Bereichen des Transportweges die Größe des / der darin befindlichen Streckenfenster schrittweise oder kontinuierlich vergrößert oder verkleinert wird und gleichzeitig die Streckenfenster in benachbarten oder anderen Bereichen des Transportweges entsprechend verkleinert oder vergrößert werden, so dass zu jedem Zeitpunkt die Summe der Größen aller Streckenfenster der Länge des Transportwegs entspricht. Diese Art der Variabilität ist insbesondere deshalb möglich, da die Streckenfenster lediglich Begrenzungen für die individuellen Bewegungen der Transportträger darstellen und ausschließlich virtuell bzw. in logischer Organisation in der übergeordneten Steuerung z.B. als Teil des Steuerungsprogramms vorliegen und daher beliebig angepasst werden können.

Es kann weiterhin erfindungsgemäß vorgesehen sein, dass jeder Transportträger innerhalb des ihm zugeordneten Streckenfensters eine weitere individuelle Bewegung ausführen kann, indem anhand der mittels der genannten Sensoreinrichtungen ermittelten Position und Bewegungsparameter diejenigen Elektromagnete entlang des Transportweges angesteuert werden, welche innerhalb des zugeordneten Streckenfensters liegen, so dass hierdurch zumindest logisch ein zweiter Linearantrieb gebildet wird, wie es eingangs beschrieben wurde.

Die Ansteuerung der Elektromagnete kann erfindungsgemäß derart erfolgen, dass je nach Anforderung der entsprechende Transportträger eine zusätzliche Bewegung zu der Bewegung des logischen ersten Antriebs, insbesondere Linearantriebes ausführt, welche beschleunigt, verzögert, kontinuierlich oder genau entgegengesetzt sein kann zu der Bewegung des ersten Antriebs, insbesondere Linearantriebes, so dass der Transportträger im letztgenannten Fall zumindest für eine bestimmte Zeit stillsteht und so eine getaktete Gesamtbewegung des Transportträgers ermöglicht wird.

Es kann weiterhin erfindungsgemäß vorgesehen sein, sowohl die Bewegungen und die Bewegungsarten aller Transportträger als auch die Bewegung und die Bewegungsart der Streckenfenster frei programmierbar zu gestalten, so dass Änderungen oder Anpassungen in einfacher Weise durch eine Programmanpassung erfolgen können. Es kann weiterhin erfindungsgemäß vorgesehen sein, die genannten Bewegungen dynamisch und / oder interaktiv auszuführen, wodurch es möglich ist durch die Abfrage weiterer Sensoren oder die Abfrage von Daten aus einer internen oder externen Datenbank die Bewegungsabläufe anzupassen.

Ausführungsbeispiele der Erfindung sind in den nachfolgenden Figuren dargestellt. Es zeigen:
- Figur 1:: die schematische Darstellung eines geschlossenen Transportwegs mit gleich großen Streckenfenstern und Transportträgern in äquidistanten Stellungen.
- Figur 2: die schematische Darstellung eines geschlossenen Transportwegs mit gleich großen Steckenfenstern und Transportträgern in unterschiedlichen Stellungen.
- Figur 3: die schematische Darstellung eines geschlossenen Transportwegs mit unterschiedlich großen Streckenfenstern und Transportträgern in unterschiedlichen Stellungen.
- Figur 4: die schematische Darstellung eines Aufbaus für das Zusammenspiel von Transportträgern mit mehreren Dauermagneten und stationär angeordneten Elektromagneten.
- Figur 5: eine weitere Ausführung, bei der nur zwei Dauermagnete an jedem Transportträger angebracht sind.
- Figur 6: eine schematische perspektivische Darstellung eines Transportträgers und der stationär angeordneten Elektromagnete.
- Figur 7: zeigt eine erste Ausführung eines erfindungsgemäßen Steuerungskonzeptes.
- Figur 8: zeigt eine zweite Ausführung eines erfindungsgemäßen Steuerungskonzeptes.

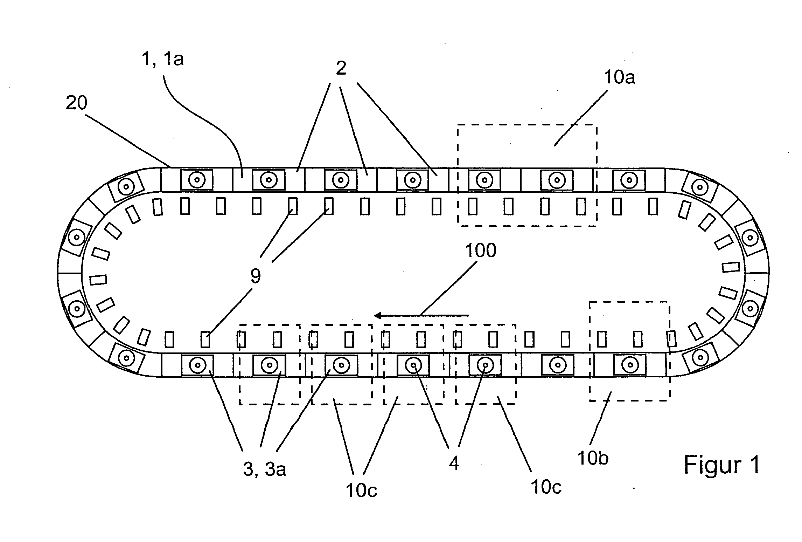

Figur 1 zeigt beispielhaft eine erfindungsgemäße erste schematische Darstellung eines Transportsystems einer Druckmaschine für die Bedruckung von optischen Datenträgern wie CDs. DVDs oder ähnliches, oder von Smart Cards, Kreditkarten, Telefonkarten oder ähnliches oder von einer anderen Art von Einzelobjekten.

Die Druckmaschine weist hierzu einen geschlossenen Transportweg 1 auf, auf dem eine Anzahl von gleichartigen Transportträgern 3 in Führungseinrichtungen 20 entlang bewegt werden kann. Jeder Transportträger 3 weist hierbei zur Aufnahme der Einzelobjekte beispielsweise eine oder mehrere Ausnehmungen 4 an seiner Oberfläche auf, in welche das zu bedruckende Einzelobjekt wie beispielsweise eine CD eingelegt wird und dort mittels nicht dargestellter Einrichtungen in seiner Lage fixiert wird.

Da das im Folgenden erläuterte erfindungsgemäße Verfahren und die erfindungsgemäßen Ausführungen im wesentlichen unabhängig von der Art der verwendeten Einzelobjekte ist, werden im Folgenden stets CDs beispielhaft genannt, ohne die Anwendung hierauf zu beschränken. Auch ist die Anwendung nicht auf eine Druckmaschine beschränkt, selbst wenn diese hier beispielhaft beschrieben ist.

Die auf die Transportträger 3 aufgelegten CDs werden entlang des Transportwegs 1 in der Transportrichtung 100 weiterbewegt, so dass sie unterschiedliche Behandlungsstationen 10a, 10b, 10c durchlaufen, in welchen je nach Art und Ausführung der jeweiligen Behandlungsstation unterschiedliche Behandlungen der CDs erfolgen.

So kann beispielsweise die Behandlungsstation 10a ein Handlingsystem umfassen, mit welchem die CDs von nicht dargestellten Transportstapeln in die Ausnehmungen der Transportträger 3 aufgelegt oder von Ihnen entnommen werden. Die anschließend von den Transportträgern 3 durchlaufenen Behandlungsstationen 10b und 10c und können beispielsweise Druckstationen beinhalten, in welchen die Oberflächen der CDs mit einem einfarbigen oder mehrfarbigen Bild mit unterschiedlichen Druckverfahren wie Siebdruck, Flexodruck, Offsetdruck oder InkJet Druck oder einem anderen Druckverfahren bedruckt werden.

Je nach Art der Behandlungsstationen 10a, 10b, 10c und der dort ausgeführten Behandlung kann dabei innerhalb der jeweiligen Behandlungsstation eine unterschiedliche Bewegungsart des Transportträgers 3 erforderlich sein, wie beispielsweise eine kontinuierliche Bewegung bei einer Offsetbedruckung der CD Oberfläche, oder eine getaktete Bewegung wie sie bei einer Bedruckung mit einem Siebdruckverfahren häufig erforderlich ist, oder eine beschleunigte oder verzögerte Bewegung, wie sie in den Übergangsbereichen zwischen einer kontinuierlichen Bewegung und einer getakteten Bewegung erforderlich ist.

Erfindungsgemäß wird der Transportweg 1 in einzelne logische Streckenfenster 2 eingeteilt, wobei jedem Streckenfenster 2 ein Transportträger 3 zugeordnet ist. Die Streckenfenster 2 existieren hierbei ausschließlich virtuell bzw. logisch, z.B. im Arbeitsspeicher der übergeordneten Steuerung und stellen wie bereits erläutert die Begrenzung dar, innerhalb derer sich die jeweils zugeordneten Transportträger 3 bewegen können.

Die Länge der Streckenfenster 2 ist wie in Figur 1 gezeigt so gewählt, dass alle Streckenfenster 2 gleich lang sind und der Länge 1a des gesamten Transportwegs 1 dividiert durch die Anzahl der sich auf der Transportlänge 1a befindlichen Transportträger 3 entsprechen. Weiterhin ist die Länge der Transportträger 3 kleiner als die Länge der Streckenfenster 2, so dass jeder Transportträger 3 innerhalb des ihm zugeordneten Streckenfensters 2 bewegt werden kann, ohne mit einem benachbarten Transportträger 3 zusammen zu stoßen oder ihn zu behindern.

Es ist weiterhin vorgesehen entlang des Transportweges 1 in bestimmten Abständen eine Anzahl von Sensoreinrichtungen 9 anzubringen, wodurch wie bereits beschrieben die Positionen und die Bewegungsparameter der Transportträger 3 erfasst werden können. Die Sensoreinrichtungen 9 sind hierzu an die übergeordnete Steuerung angeschlossen, welche die von den Sensoreinrichtungen 9 gelieferten Daten erfasst und entsprechend eines Steuerprogramms weiterverarbeitet.

Die Bewegung der Transportträger 3 entlang des Transportwegs 1 in Richtung der Bewegungsrichtung 100 erfolgt wie bereits beschrieben dadurch, dass die Streckenfenster 2 mit den in ihnen enthaltenen Transportträgern 3 mit einer gemeinsamen Bewegungsart entlang des Transportwegs 1 bewegt werden. Dieser Bewegung ist eine für jeden Transportträger 3 individuelle Bewegung überlagert, welche den Erfordernissen an der jeweiligen Position des Transportträgers 3 entlang des Transportwegs 1 angepasst ist und welche darüber hinaus von der übergeordneten Steuerung entsprechend des Ablaufprogramms und den von den jeweiligen Sensoren 9 gelieferten Daten kontrolliert und gesteuert wird.

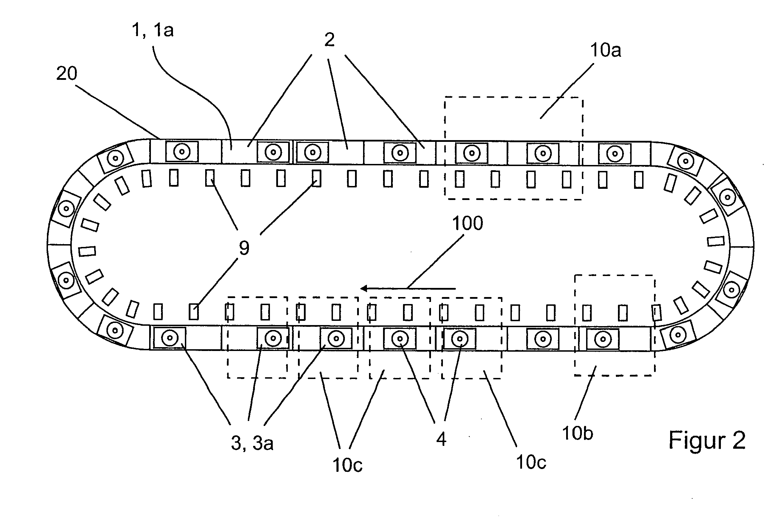

Figur 2 zeigt eine erfindungsgemäße schematische Darstellung eines Transportsystems einer Druckmaschine gemäß Figur 1, wobei die Transportträger 3 beispielhaft unterschiedliche Stellungen 3a aufweisen, wie es zu einem bestimmten Zeitpunkt eines Produktionsablaufes der Fall sein kann. Es ist leicht zu erkennen, dass sich jeder Transportträger 3 nur innerhalb des ihm zugewiesenen Streckenfensters 2 bewegt, wobei die tatsächlichen Abstände benachbarter Transportträger 3 zueinander unterschiedlich sein können, die Abstände benachbarter Streckenfenster 2 zueinander jedoch stets gleich sind.

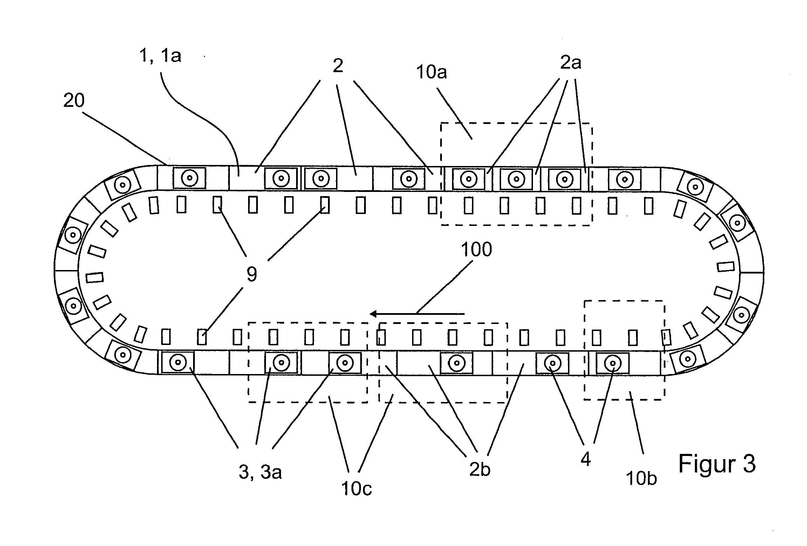

Figur 3 zeigt eine erfindungsgemäße schematische Darstellung eines Transportsystems einer Druckmaschine gemäß Figur 1, jedoch mit dem Unterschied, dass die Streckenfenster 2 unterschiedliche Größe aufweisen können. So weisen beispielsweise die Streckenfester 2a im Bereich der Behandlungsstation 10a eine geringere Größe auf als die aus der gesamten Transportweglänge 1a und der Anzahl der sich darauf befindlichen Transportträger 3 ermittelte Größe der Streckenfenster 2, was beispielsweise für die in der Behandlungsstation 10a vorgenommene Behandlung erforderlich ist. Gleichzeitig sind die Streckenfenster 2b größer als die rechnerische Größe der Streckenfenster 2, so dass die Summe der Längen aller Streckenfester konstant bleibt und gleich der Gesamtlänge 1 a des Transportwegs 1 ist.

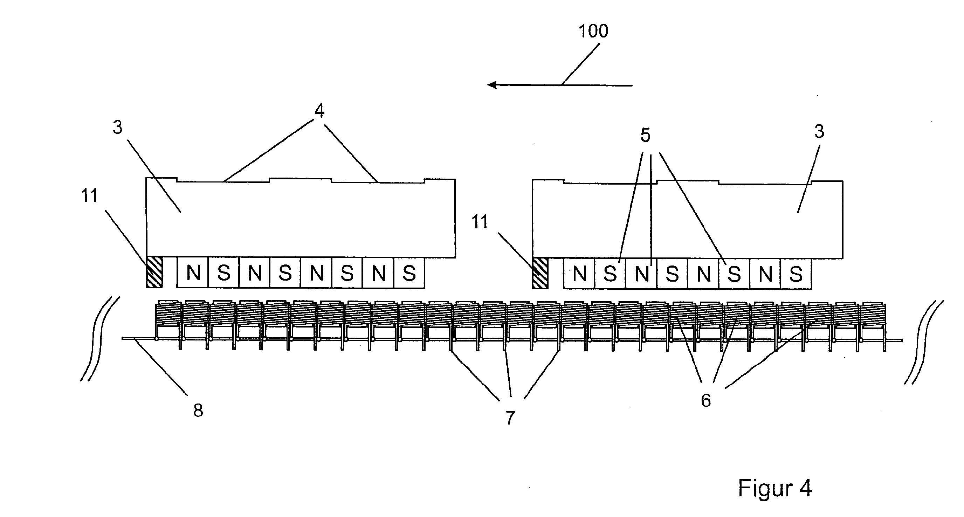

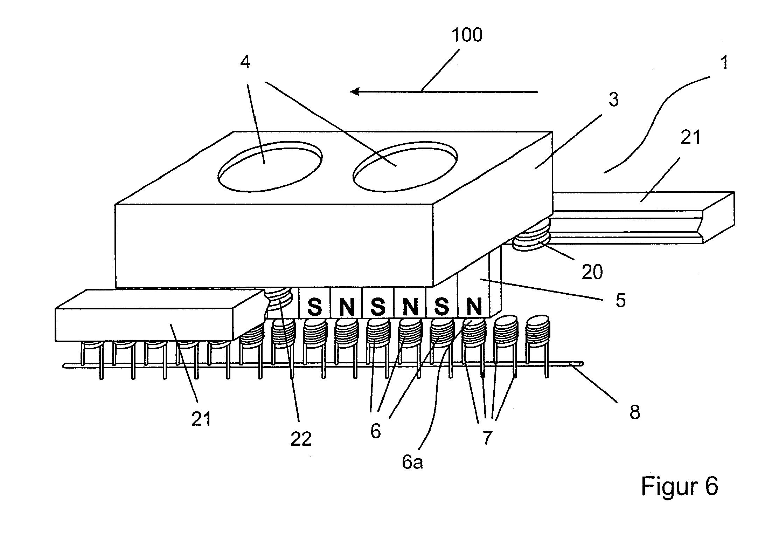

Figur 4 zeigt schematisch einen beispielhaften Aufbau für das Zusammenspiel von Transportträgern 3 und stationär entlang des Transportwegs angeordneten Elektromagneten 6. Die Transportträger 3 werden hierzu entlang des Transportweges1 mittels einer wie in Figur 6 dargestellten Führungseinrichtung 20 geführt, beispielsweise über Laufschienen 21 und entsprechende an jedem Transportträger angebrachte Laufrollen 22.

An den Transportträgern 3 sind beispielsweise an ihrer Unterseite eine Anzahl von Dauermagneten 5 mit wechselnder Polarität so angeordnet, dass sie mit den entlang des Transportwegs 1 stationär angebrachten Elektromagneten 6 in Wechselwirkung treten. Der Abstand der Elektromagnete 6 zueinander kann dabei je nach Ausführung entweder gleich dem Abstand der Magnetpole der Dauermagnete 5 sein oder auch einen unterschiedlichen Abstand aufweisen, so dass je nach Ausführung und Ansteuerart der Elektromagnete 6 in einfacher Weise eine Kraftwirkung entlang der Bewegungsrichtung 100 oder auch entgegengesetzt zu ihr erzeugt werden kann.

Es ist dabei für die erfindungsgemäße Art des Antriebes der Transportträger 3 unerheblich, ob die Dauermagnete mit Polschuhen oder Käfigen versehen sind um dadurch den magnetischen Kraftfluss gegenüber den Elektromagneten zu erhöhen und zu optimieren. Es ist ebenfalls unerheblich, ob die Elektromagnete einseitig oder beidseitig mit den Dauermagneten in Wechselwirkung treten.

Die Sensoren 11 an jedem Transportträger 3 treten dabei entlang des Transportweges 1 in Wechselwirkung mit entsprechenden Gegenstücken 9, welche entlang des Transportweges 1 angebracht sind, indem sie beispielsweise induktiv, optisch oder kapazitiv mit den entsprechenden Gegenstücken 9 interagieren. Hierdurch werden für jeden Transportträger 3 an seiner momentanen Position entsprechende Positions- und Bewegungssignale erzeugt, welche von einer übergeordneten Steuerung erfasst, ausgewertet und so verarbeitet werden, dass zu jedem Zeitpunkt für jeden Transportträger dessen individuelle Position und dessen Bewegungsparameter bekannt sind. Diese für jeden Transportträger 3 individuellen Informationen werden weiterhin von einer übergeordneten Steuerung verwendet, um dessen Bewegungsart in Abhängigkeit von seiner aktuellen Position zu steuern.

Durch diese Art der Datenerfassung und Bewegungssteuerung ist es möglich, jeden Transportträger 3 entlang des gesamten Transportweges 1 und insbesondere innerhalb seines zugeordneten Streckenfensters 2 individuell zu steuern.

In einer weiteren bevorzugten erfindungsgemäßen Ausführung ist es vorgesehen, anstelle der Sensoreinrichtungen 9 und 11 einen Teil der Spulen der entlang des Transportweges 1 stationär angeordneten Elektromagnete 6 zumindest zeitweise als induktive Sensoren zu verwenden. Aufgrund der Bewegung der sich an den als Sensoren geschalteten Spulen vorbei bewegenden Dauermagnete 5 der Transportträger 3 wird in den Spulen eine Spannung induziert, deren Größe und Phasenlage zueinander von einer übergeordneten Steuerung erfasst und ausgewertet wird. Über die Stärke der Messsignale und deren Phasenlage zueinander lassen sich nach einer in der übergeordneten Steuerung erfolgten Verarbeitung so die momentane Position, Geschwindigkeit, Bewegungsrichtung und die Beschleunigung jedes einzelnen Transportträgers 3 ermitteln, wodurch es ebenfalls möglich wird, jeden Transportträger 3 entlang des gesamten Transportweges 1 individuell in seiner Bewegungsart zu steuern, insbesondere innerhalb seines zugeordneten Streckenfensters 2.

Zur Ansteuerung der Elektromagnete 6 weisen deren Spulen Anschlüsse 7 auf, die mit entsprechenden Treiberschaltungen der übergeordneten Steuerung verbunden sind. Es kann dabei zweckmäßig sein jeweils einen Anschluss 7 jeder Spule zu einem gemeinsamen Anschluss 8 zusammen zu fassen, welcher auf einem gemeinsamen elektrischen Potential, beispielsweise Massepotential gelegt ist.

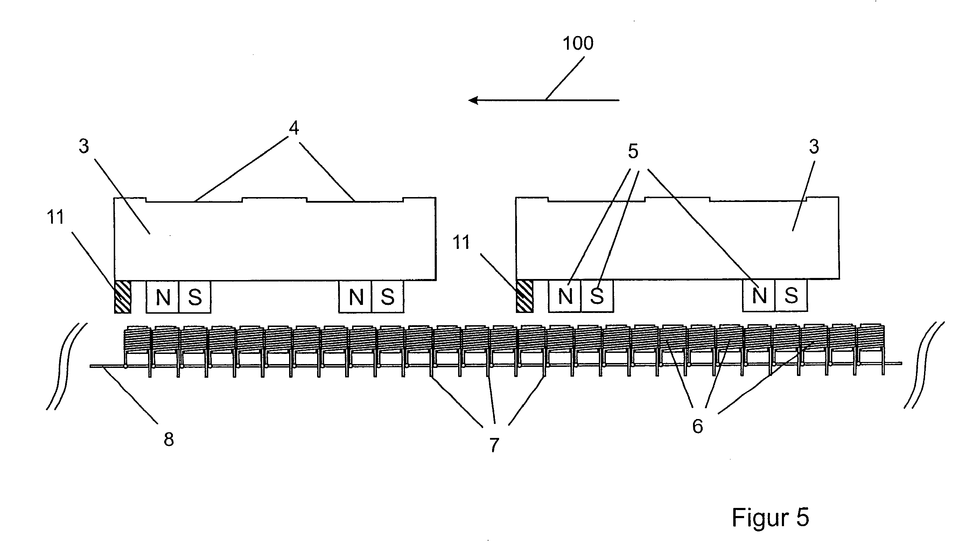

Figur 5 zeigt eine weitere erfindungsgemäße Ausführung, bei der beispielsweise nur wenige Dauermagnete 5 an jedem Transportträger 3angebracht sind, die bevorzugt als Zylinder ausgeführt sein können. Die Magnetzylinder weisen zudem einen Durchmesser und einen Abstand zueinander auf, welche so bemessen sind, dass bei einem geschlossenen Transportweg 1 eine problemlose Bewegung der Transportträger 3 auch in den Kurven des Transportweges 1 möglich ist, ohne dass die Magnetzylinder an irgendeiner Stelle des Transportweges 1 an Elemente der Transportwegs 1 wie beispielsweise Laufschienen, Elektromagnete, Sensoreinrichtungen oder Ähnliches anschlagen. Dadurch ist es möglich diese Art des Antriebes auch in den Kurven des geschlossenen Transportwegs 1 einzusetzen, wodurch problematische Übergaben der Transportträger 3 an unterschiedliche Transportsysteme im Kurvenbereich des geschlossenen Transportwegs 1 entfallen.

Es kann zweckmäßig sein, insbesondere in den Kurvenbereichen des geschlossenen Transportweges 1 den Antriebsspalt zwischen den Dauermagneten 5 an den Transportträgern 3 und den antreibenden Elektromagneten 6 zu vergrößern, um so einen problemlosen Transport der Transportträger 6 zu ermöglichen. Die damit verbundene Kraftminderung auf die Transportträger 3 und eine gegebenenfalls damit verbundene geringere Positioniergenauigkeit ist insbesondere in den Kurvenbereichen zulässig, da Bearbeitungsstationen mit hohen Genauigkeitsanforderungen in der Regel entlang der linearen Abschnitte eines Transportweges angeordnet sind.

Figur 6 zeigt nochmals perspektivisch eine schematische erfindungsgemäße Ausführung eines Transportträgers 3. Der Transportträger 3 weist an seiner Oberfläche beispielsweise zwei Aufnahmen 4 auf, in welche die zu bedruckenden CDs eingelegt werden und dort mit nicht dargestellten Einrichtungen in ihrer Lage fixiert werden. An der Unterseite des Transportträgers 3 sind eine Anzahl Dauermagnete 5 angeordnet, welche mit den entlang des Transportwegs 1 stationär angebrachten Elektromagneten 6 in Wechselwirkung treten.

Hierzu weisen die Elektromagnete 6 zu den Magnetpolen der Dauermagnete einen geringen Spalt 6a auf, so dass eine optimale Kraftwirkung zwischen den Elektromagneten 6 und der Dauermagneten 5 und damit auf der Transportträger 3 bei gleichzeitiger optimierter Bewegungsfreiheit erzielt wird. Um die Transportträger 3 mechanisch entlang des Transportweges definiert zu führen und um stets einen definierten Abstand 6a der Magnete 5 zu den Elektromagneten 6 zu gewährleisten sind entlang des Transportwegs 1 Führungsschienen 21 angebracht, auf denen die an jedem Transportträger 3 angebrachten Transportrollen 22 abrollen. Führungsschienen und Transportrollen können so eine Führungseinrichtung im Sinne der Erfindung bilden. Es kann zweckmäßig sein, zumindest eine der Transportrollen 22 mit einer bestimmten Kraft mechanisch vorzuspannen, um zu gewährleisten, dass zu jedem Zeitpunkt die Transportrollen 22 an den Laufschienen 21 kraftschlüssig anliegen.

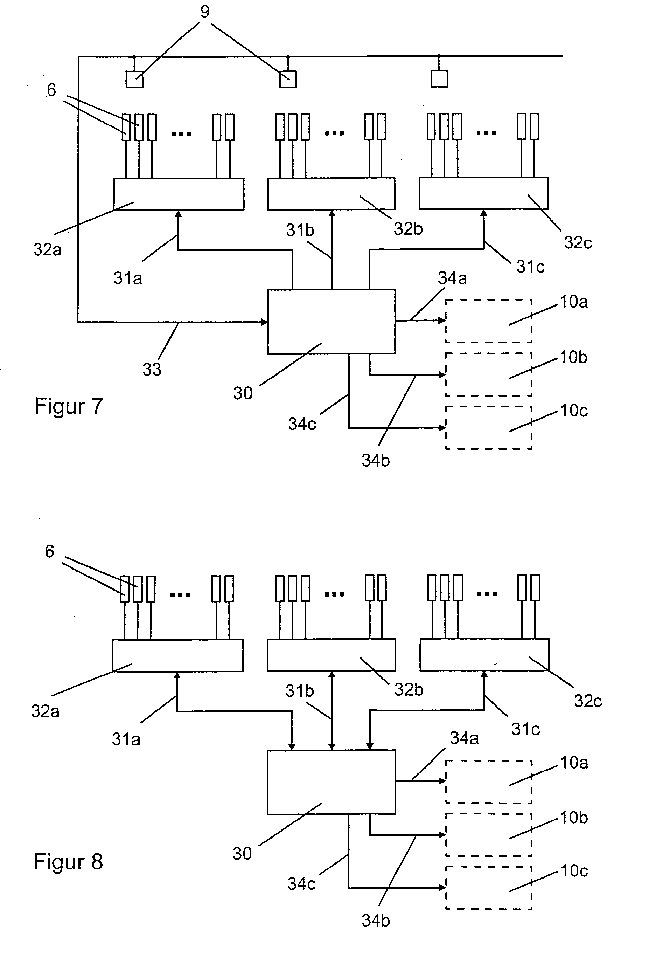

Figur 7 zeigt schematisch ein erstes erfindungsgemäßes Steuerungskonzept. Eine übergeordnete Steuerung 30 steuert über entsprechende Steuerleitungen 31 a, 31 b, 31 c Treiberstufen 32a, 32b, 32c, die ihrerseits die Elektromagnete 6 ansteuern. Es ist dabei erfindungsgemäß vorgesehen jeweils eine bestimmte Anzahl von Elektromagneten 6 zu einer Gruppe A, B, C, etc. zusammenzufassen, welche von den jeweiligen Treibermodulen 32a, 32b, 32c, etc. angesteuert werden.

Hierdurch ist es möglich, einen für eine bestimmte Anwendung neu zu erstellenden Transportweg aus einer Anzahl von Modulen zu erstellen, wodurch auch beim Erstaufbau eines Transportsystems eine hohe Flexibilität gewährleistet ist. Die von den Sensoreinrichtungen 9 erfassten Signale werden über eine Datenverbindung 33 an die übergeordnete Steuerung 30 geliefert, in welcher die Auswertung und Verarbeitung der Daten erfolgt. Die eigentliche Ablaufsteuerung erfolgt in der übergeordneten Steuerung 30 entsprechend eines Steuerprogramms, welches nicht nur die Bewegungen und die Positionierungen der Transportträger 3 entlang des Transportweges steuern kann, sondern auch die Abläufe und Funktionen in den Bearbeitungsstationen 10a, 10b, 10c über entsprechende Datenverbindungen 34a, 34b, 34c steuern.

Figur 8 zeigt schematisch ein zweites erfindungsgemäßes Steuerungskonzept, bei welchem anstelle der Sensoreinrichtungen 9 jeweils ein Teil der Elektromagnete 6 als Sensoren geschaltet wird und über diese wie beschrieben die Positionsdaten und Bewegungsparameter erfasst werden. Hierzu sind die Datenverbindungen 31a, 31b, 31c zwischen der übergeordneten Steuerung 30 und den Treibermodulen bidirektional ausgeführt.

Es kann allgemein unabhängig von den vorgenannten Ausführungen erfindungsgemäß das nachfolgend beschriebene Verfahren durchgeführt werden, bei dem zu Beginn einer Abarbeitung eines Steuerprogramms die Transportträger auf eine jeweilige Referenzposition gefahren werden, um damit einen Referenzzustand herzustellen.

Da jeder Transportträger im ausgeschalteten Zustand des Transportsystems entlang des Transportwegs beliebig positioniert werden kann, ist es allgemein auch möglich beispielsweise alle Transportträger unmittelbar hintereinander anzuordnen, so dass mehrere Transportträger ganz oder teilweise in einem Streckenfenster zu liegen kommen.

Da die übergeordnete Steuerung nach dem Einschalten des Transportsystems und zu Beginn der Abarbeitung des Steuerprogramms keine Informationen über die Anzahl der Transportträger und deren Positionen entlang des Transportsystems im internen Speicher hinterlegt hat, kann allgemein in einem ersten Schritt zunächst auf die Elektromagnete ein gleichartiges Signal in der Form gegeben werden, so dass alle Transportträger gleichartig mit einer geringen Amplitude um ihre jeweilige Position so bewegt werden, dass die an den Transportträgern angebrachten Sensoreinrichtungen in Wechselwirkung mit ihren entlang des Transportwegs angebrachten Gegenstücken treten können.

Hierdurch wird von den Sensoreinrichtungen jedes Streckenabschnitts, an welchem sich zu diesem Zeitpunkt ein Transportträger befindet, ein Signal an die übergeordnete Steuerung geliefert, wodurch die Anzahl der Transportträger und deren momentane Positionen kontinuierlich bestimmt werden können. In einem zweiten Schritt können nun alle Transportträger durch eine entsprechende Ansteuerung der Elektromagnete so gegeneinander entlang des Transportwegs bewegt werden, dass alle Transportträger zu den unmittelbar benachbarten Transportträgern jeweils gleich weit entfernt liegen und damit der Abstand der Transportträger der Länge eines Streckenfensters entspricht.

Die Positionen der Transportträger sind damit zu diesem Zeitpunkt eindeutig festgelegt und dieser Zustand entspricht damit einem Referenzzustand. Es ist selbstverständlich auch möglich, eine andere in einem Festwertspeicher der übergeordneten Steuerung hinterlegte Anordnung der Transportträger entlang des Transportweges als Referenzzustand einzunehmen, in welchem die Transportträger beispielsweise in einem bestimmten Streckenabschnitt enger zueinander liegen. Hierzu werden die Transportträger entsprechend diesem hinterlegten Muster angeordnet.

Es ist selbstverständlich auch möglich, diese Art der Referenzierung mehrfach nacheinander auszuführen oder zu bestimmten Zeitpunkten auszuführen um beispielsweise zwischen einander nachfolgenden unterschiedlichen Arbeitsabläufen gleiche Ausgangszustände zu erzeugen.

Bezüglich sämtlicher Ausführungen ist festzustellen, dass die in Verbindung mit einer Ausführung genannten technischen Merkmale nicht nur bei der spezifischen Ausführung eingesetzt werden können, sondern auch bei den jeweils anderen Ausführungen. Sämtliche offenbarten technischen Merkmale dieser Erfindungsbeschreibung sind als erfindungswesentlich einzustufen und beliebig miteinander kombinierbar oder in Alleinstellung einsetzbar.

## Patentansprüche

1. Transportsystem umfassend mehrere Transportträger (3) die mittels einer Führungseinrichtung (20,21,22) entlang eines Transportweges (1) transportierbar sind, insbesondere um zu bedruckende Werkstücke durch Behandlungsstationen (10a, 10b, 10c) einer Druckmaschine zu transportieren, wobei entlang eines geschlossenen Transportwegs (1) individuell ansteuerbare Elektromagnete (6) angeordnet sind und jeder Transportträger (3) wenigstens einen Magneten (5) aufweist, wobei jeder Transportträger (3) durch eine elektromagnetische Wechselwirkung in Richtung des Transportwegs (1) transportierbar ist und zumindest abschnittsweise und/oder zeitweise in seiner Bewegung/Bewegungsart individuell steuerbar ist, **dadurch gekennzeichnet, dass** entlang des Transportweges (1) Sensoreinrichtungen (9,11) angeordnet sind, mittels denen die Position und/oder die Bewegung jedes Transportträgers (3) entlang des Transportwegs (1) erfassbar ist, wobei zumindest ein Teil der Elektromagnete (6) entlang des Transportswegs (1) zumindest zeitweise als Sensoreinrichtungen eingesetzt sind.

2. Transportsystem nach Anspruch 1, **dadurch gekennzeichnet, dass** jeder Transportträger (3) mit den Elektromagneten (6) entlang des Transportwegs (1) einen eigenen Antrieb, insbesondere einen Linearantrieb bildet.

3. Transportsystem nach einem der vorherigen Ansprüche, **dadurch gekennzeichnet, dass** die Elektromagnete (6) entlang des Transportwegs (1) zueinander äquidistant angeordnet sind, insbesondere wobei die Abstände der Elektromagnete (6) zueinander kleiner sind, insbesondere um ein Vielfaches kleiner sind als die Länge eines Transportträgers (3).

4. Verfahren zum Transport von Transportträgern (3) mittels einer Führungseinrichtung (20, 21, 22) entlang eines Transportweges (1), insbesondere um zu bedruckende Werkstücke durch Behandlungsstationen (10a, 10b, 10c) einer Druckmaschine zu transportieren, bei dem jeder Transportträger (3) entlang eines geschlossenen Transportwegs (1) mittels eines für jeden Transportträger (3) individuell erzeugten wandernden Magnetfeldes zumindest abschnittsweise und/oder zeitweise in seiner Bewegung/Bewegungsart gesteuert wird, **dadurch gekennzeichnet, dass** die Position und/oder Bewegung eines Transportträgers (3) ermittelt wird durch zumindest einen Teil der Elektromagnete (6) entlang des Transportswegs (1), die zumindest zeitweise als Sensoreinrichtungen (9,11) eingesetzt werden, wobei die Signale / Daten der Sensoreinrichtung (9,11) einer übergeordneten Steuerung (30) zugeführt werden.

5. Verfahren nach Anspruch 4, **dadurch gekennzeichnet, dass** das wandernde Magnetfeld erzeugt wird durch entlang des Transportwegs (1), insbesondere entlang/an der Führungseinrichtung (21) angeordnete ansteuerbare Elektromagnete (6), wobei das Magnetfeld dieser Elektromagnete (6) wechselwirkt mit einem an einem Transportträger (3) durch wenigstens einen Magneten (5), insbesondere Permanentmagneten erzeugten Magnetfeld.

6. Verfahren nach einem der vorherigen Ansprüche 4 oder 5, **dadurch gekennzeichnet, dass** die Elektromagnete (6) entlang des Transportwegs (1) jeweils einzeln und/oder zu Gruppen durch eine übergeordnete Steuerung (30) angesteuert werden.

7. Verfahren nach einem der vorherigen Ansprüche 4 bis 6, **dadurch gekennzeichnet, dass** der elektromagnetische Antrieb zur Bewegung der Transportträger (3) logisch in einen ersten und einen zweiten Antrieb, insbesondere Linearantrieb unterteilt ist.

8. Verfahren nach Anspruch 7, **dadurch gekennzeichnet, dass** der logische erste Antrieb auf alle Transportträger (3) gemeinsam und gleichartig wirkt.

9. Verfahren nach einem der vorherigen Ansprüche 7 oder 8, **dadurch gekennzeichnet, dass** der logische zweite Antrieb auf jeden Transportträger (3) individuell wirkt.

10. Verfahren nach einem der vorherigen Ansprüche 4 bis 9, **dadurch gekennzeichnet, dass** die Bewegung jedes Transportträgers (3) entlang des Transportwegs (1) durch eine Überlagerung der Bewegungen des gemeinsamen logischen ersten Antriebs und des logischen zweiten Antriebs erzeugt wird.
